# EUROPEAN PATENT APPLICATION

(11) **EP 2 366 900 A2**
(43) Date of publication of application: **21.09.2011**
(21) Application number: 11425003.8
(22) Date of filing: 12.01.2011
(51) Int. Cl.: F03G 7/10

(54) **Energy generating wheel**

(30) Priority: 02.02.2010 IT FG20100001
(71) Applicant: Argentino, Emilio, 71042 Cerignola (FG) (IT)
(72) Inventor: Argentino, Emilio, 71042 Cerignola (FG) (IT)

(57) **Abstract**

The "Energy Generating Wheel" due to the disposition of its components (rotating axis in eccentric position connected to it), by rotating, uses its own weight-force and that of what is loaded onto it.

The resulting force, with application point on the crank button, increases the kinetic energy of the eccentric shaft and therefore of the machine connected to it.

In the industrial field we expect to apply it mainly to electric cars.

The "Energy Generating Wheel" would considerably increase the performance of electric cars and also it expects:
1) unlimited autonomy
2) pollution free emissions

## Description

by Argentino Emilio resident in Cerignola (FG) via Aldo Moro n.21, with Italian Nationality.
Registered on under n

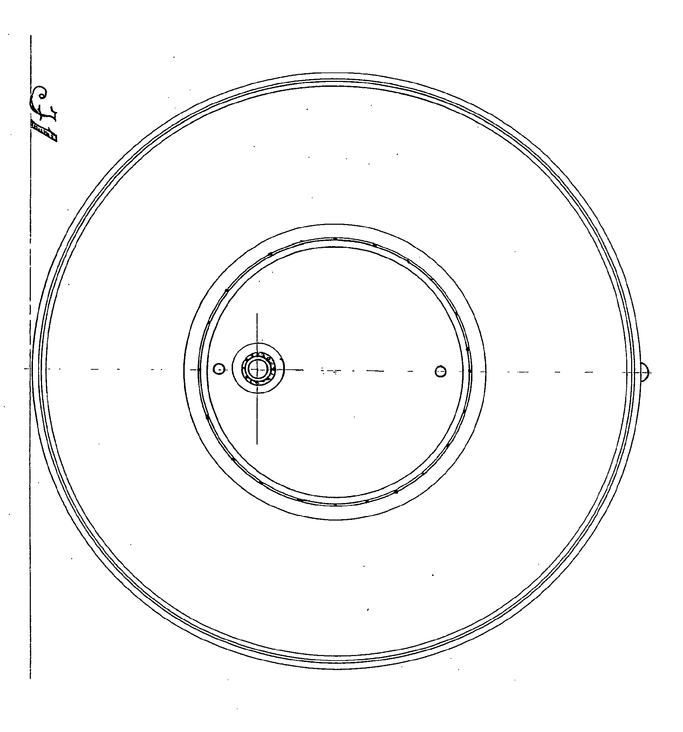

This industrial invention is a hollow cylindrical wheel or with a different shape (for ex. disc, etc...) with rotating axis connected to it, in eccentric position with respect to its centre of rotation Fig.1-Fig.2.

By making the wheel spin with the right connection, its weight-force is discharged onto the eccentric axis increasing the kinetic energy of the latter thus increasing its performance.

By connecting this axis directly or indirectly to an energy generating machine or becoming itself axis of a machine (for ex. bicycle, velocipede, etc), its efficiency increases in proportion to the weight-force of the wheel plus that of the mass loaded onto it.

To conclude, by using the weight-force, the "Energy Generating Wheel" generates kinetic energy that can then be converted into another form of energy.

In modem technology there is no similar device thus it is not possible to compare it with other devices to find possible advantages or disadvantages. The invention will now be described and illustrated with reference to the attached drawings that show a simplified form of execution of the "Energy Generating Wheel" according to the invention.

The illustration 1 shows a frontal view of the wheel:
The illustration 2 shows the section according to a vertical plane parallel to the eccentric axis.

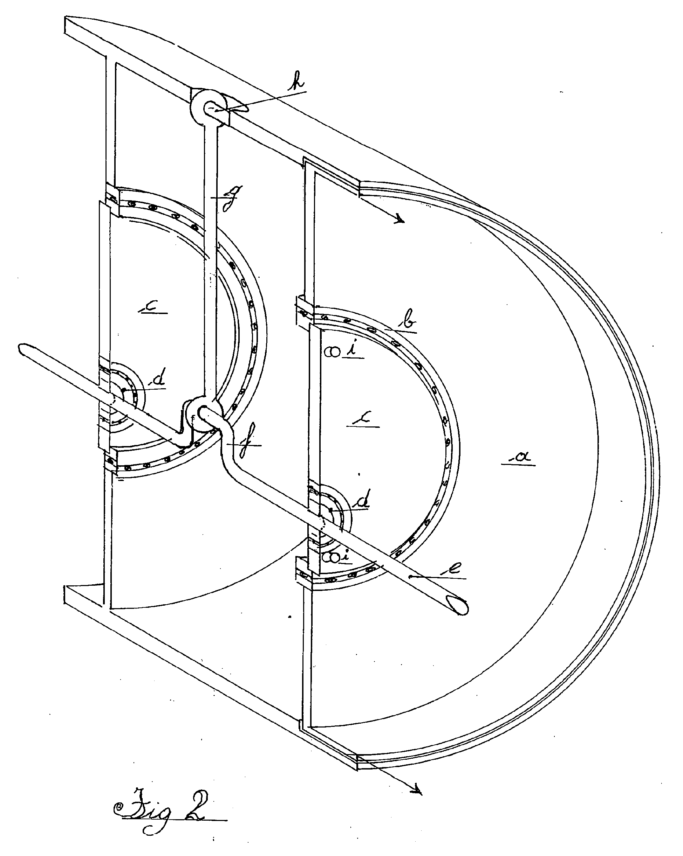

The hollow cylindrical wheel, with size and characteristics fit for the purpose, has a removable base Fig.2(a) and a fixed, non removable one.

They both have a hole at the centre with diameter that is about half the diameter of the wheel.

In each hole a bearing is fitted by friction Fig.2(b). At the centre of the bearing a metal plate is also fitted by friction Fig.2(c). This plate does not exceed the inner ring of the bearing and it is fixed externally to a fixed point with two cylinders Fig.2(i).

Inside it, at about 20mm from the centre of rotation of the wheel, there is a hole with diameter suitable to hold a bearing Fig.2(d) with internal diameter suitable to enable the passage of the eccentric axis Fig.2(e).

In its central part this axis has a crank Fig.2(f) with suitable radius connected to a connecting rod Fig.2(g) of suitable length that with the other end connects to a fixed axis Fig.2(h) placed in the centre of the lateral surface of the wheel, corresponding to the maximum distance from the centre of the axis e.

By rotating in clockwise and anti-clockwise direction, thanks to the position of the bearings and through the connecting rod-crank system, transmits the movement of the eccentric axis that will rotate in the same direction accomplishing two spins for each wheel revolution.

The active force A (weight of the wheel + possible added mass) for the rotation of the wheel has its application point on the crank button.

The resistant force R, produced by the operation of the energy generating machine to which the eccentric axis is connected, has its application point also on the crank button but with opposite direction.

Due to the action of the force A, at an increase of the resistance R, the wheel tends to rotate by pivoting on the crank button and loading onto it all its weight-force. It exceeds R thus increasing the kinetic energy of the machine and therefore the quantity of work produced.

Practically speaking, the execution details may however vary without leaving the invention ambit and thus the domain invention patent.

## Claims

1. The rotating cylindrical metal hollow wheel Fig.1-2 has a rotation axis or semiaxis Fig. 2(e) in an eccentric position with respect to the rotating wheel center.

2. According to the previous claim, the wheel has an eccentric axis Fig.2(e) linked through a crank-connecting rod Fig.2(f-g) to the wheel Fig.2(h) and driven by it.

3. According to the previous claims, the wheel has a metal plate Fig.2(c) in the centre of the bearing Fig.2(b), that contains the bearing Fig.2(d) and the fixing pins Fig.2(i).

4. According to the previous claims, thanks to the position of the bearings Fig.2(b-d), the crank-connecting rod system Fig.2(f-g) and the eccentric position of the rotation axis Fig.2(e), the wheel allows the axis to rotate in the same direction accomplishing two spins for each wheel revolution.
All aboave has been described and illustrated for the specified aims.
